# EUROPEAN PATENT SPECIFICATION

(11) **EP 2 584 065 B1**
(45) Date of publication and mention of the grant of the patent: **16.04.2014**
(21) Application number: 13151235.2
(22) Date of filing: 22.04.2010
(51) Int. Cl.: C23C 18/54, C23C 18/20, C23C 18/31, C23C 18/16, B01J 23/00, C08K 3/00, C08K 3/08, C08K 3/18, C08K 3/22, C08K 3/34, C08K 3/38, C08J 7/12, B01J 37/34, B01J 23/80, C23C 18/36, C23C 18/40, C23C 18/18, B01J 37/02

(54) **Surface metallizing method, method for preparing plastic article and plastic article made therefrom**
Oberflächenmetallisierungsverfahren, verfahren zur herstellung eines kunststoffartikels und daraus hergestellter kunststoffartikel
Procédé de métallisation de surface, procédé de préparation d'un article en plastique et article en plastique réalisé à partir de ce dernier

(30) Priority: 17.12.2009 CN 200910261216; 30.12.2009 CN 200910238957
(43) Date of publication of application: 24.04.2013
(62) Divisional of application: 10827682.5
(73) Proprietor: BYD Company Limited, Shenzhen, Guangdong 518118 (CN)
(72) Inventor: Gong, Qing, 518118 Shenzhen (CN); Zhou, Liang, 518118 Shenzhen (CN); Miao, Weifeng, 518118 Shenzhen (CN); Zhang, Xiong, 518118 Shenzhen (CN)
(74) Representative: Gulde Hengelhaupt Ziebig & Schneider

(56) References cited:
- US-A- 5 422 383
- US-A- 5 599 592
- US-A1- 2007 247 822
- US-A1- 2008 015 320
- US-A1- 2009 292 051
- US-B1- 6 696 173
- US-B1- 6 706 785

## Description

The present invention relates to surface treatment, more particularly to surface metallization on non-metal material such as plastic.

### BACKGROUND OF THE INVENTION

Plastics having metallized layer on their surface as pathways of electromagnetic signal conduction are widely used in automotive, industrial, computer, telecommunications and other fields. Selectively forming a metallized layer is one of important processes for preparing such plastic products. The method for forming a metallized layer in prior art is usually normally practiced by forming a metal core as a catalytic center on the plastic support surface so that electroless plating may be performed. However, processes related thereto are complex where strict demand on equipment is needed whereas the energy consumption is high. Further, there is a low adhesive force between the coating and the plastic support.

US 2009/0292051 A1 discloses a thermoplastic composition including among others an additive for surface plating, which is activated by laser treatment. The additive may be a heavy metal mixture oxide spinel or a copper salt.

US 2008/0015320 A1 refers to a process for making a light-activable polymer composite. The method includes the step of forming a layer on a surface by applying a polymer composition including a spinel crystal filler. Prior to metal plating, the layer is activated by laser treatment.

US5599592 A discloses a method for metallizing the surface of a plastic material, comprising the steps of incorporating oxide grains (e.g. Sb₂O₃, SnO₂, Al₂O₃, ZnO, Fe₂O₃, Fe₃O₄) to the plastic material, laser-treating the surface, immersing the material in a copper or nickel electroless plating bath and immersing the coated material in a second electroless plating bath.

### SUMMARY OF THE INVENTION

In view of the foregoing, there remains an opportunity to provide a method for metallizing a plastic surface, in which the plastic metallization is easily performed with lower energy consumption. Further, there remains an opportunity to provide a method for preparing a plastic article and a plastic article made therefrom, in which the adhesive force between the coating layer and the plastic or non-metal support is enhanced.

According to an embodiment of the invention, a method for metallizing a plastic surface is provided. The plastic may comprise a supporting material and an electroless plating promoter, the method comprising the steps of: 1) gasifying the plastic surface by laser to expose the electroless plating promoter; and 2) electroless plating a layer of copper or nickel on the plastic surface, followed by electroplating or a second electroless plating to form a metallized layer on the plastic surface.

According to the invention, the electroless plating promoter includes one or more members selected from a group consisting of ABO₂ type composite oxides having a delafossite structure, in which A is one of metal elements selected from Co, Ni, Cu, B is an element selected from a group consisting of Ni, Mn, Cr, Al and Fe where A, B are different.

According to another embodiment of the invention, a method for preparing a plastic article is provided. The method comprises the steps of: 1) forming at least a part of the plastic article with a support comprising a supporting material and an electroless plating promoter; 2) gasifying a surface of the support by laser to expose the electroless plating promoter as mentioned above; and 3) electroless plating a layer of copper or nickel on the surface followed by electroplating or electroless plating at least one time, to form a metallized layer on the surface.

According to another embodiment of the invention, a plastic article made by the method as described above is provided.

As found by the inventors, the surface containing the electroless plating promoter may be directly performed with electroless plating, and the plastic will not be degradated. According to an embodiment of the invention, the electroless plating promoter may be at least one selected from a grouping consisting of CuC₂O₄, MNiO₂, MMnO₂, MCrO₂, MAIO₂, and MFeO₂, in which M is selected from Cu, Ni or Co.

In the method for preparing a plastic article, the electroless plating promoter may be distributed evenly in the plastic support, a predetermined area on the surface of the plastic support may be gasified by, for example, laser to expose the electroless plating promoter so that the electroless plating promoter may not be reduced into pure metal without high energy consumption. And further electroplating or electroless plating may be performed to form the desired metallized layer, thus achieving the selective surface metallization with simple process, lower energy consumption and reduced cost.

In addition, the electroless plating promoter may be evenly distributed in the plastic support, so that the adhesive force between the coating layer and the plastic support after electroless plating is high, thus improving the quality of the plastic article manufactured.

Other variations, embodiments and features of the presently disclosed permanent magnetic materials will become evident from the following detailed description, drawings and claims.

### DETAILED DESCRIPTION OF THE EMBODIMENTS OF THE INVENTION

In the following, a method for metallizing a plastic surface is provided. The plastic comprises a supporting material and an electroless plating promoter. The method comprises the steps of: 1) gasifying the plastic surface by laser to expose the electroless plating promoter; and 2) electroless plating a layer of copper or nickel on the plastic surface, followed by electroplating or a second electroless plating to form a metallized layer on the plastic surface. The plastic surface may be gasified by laser to expose the electroless plating promoter. And the laser may have a wavelength ranging from about 157 nm to about 10.6 µm with a scanning speed from about 500 to about 8000 mm/s, a scanning step size from about 3 to about 9 µm, a scan time delay from about 30 to 100 µs, a laser power from about 3 to 4 W, a frequency from about 30 to 40 KHz and a filled distance from about 10 to 50 µm.

The electroless plating promoter may be a particle with an average diameter of not greater than 100 micrometers. The average diameter of the electroless plating promoter may range from about 20 nanometers to about 100 micrometers.

The electroless plating promoter may include one or more members selected from a group consisting of ABO₂ type composite oxides having a delafossite structure, in which A is one of metal elements selected from Co, Ni, Cu, B is an element selected from a group consisting of Ni, Mn, Cr, Al and Fe where A, B are different.

Preferably, the electroless plating promoter may include one or more members selected from a group consisting MNiO₂, MMnO₂, MCrO₂, MAlO₂, MFeO₂ in which M is Cu, Ni or Co.

The supporting material may be a thermoplastic or thermosetting resin, and the thermoplastic may include one or more members selected from a group consisting of polyolefin, polycarbonate, polyester, polyamide, polyaromatic ether, polyester-imide, polycarbonate/acrylonitrile-butadiene-styrene composite, polyphenylene oxide, polyphenylene sulfide, polyimide, polysulfone, poly (ether ether ketone), polybenzimidazole and liquid crystalline polymer; the thermosetting resin may include one or more members selected from a group consisting of phenolic resin, urea-formaldehyde resin, melamine-formaldehyde resin, epoxy resin, alkyd resin and polyurethane.

In the surface metallizing method as described above, because the surface of the plastic support may be gasified by, for example, laser to expose the electroless plating promoter, the electroless plating promoter may not be reduced into pure metal without high energy consumption. And the adhesive force between the coating layer and the plastic support after electroless plating is very high, thus improving the process of selective surface metallization.

However, it should be noted, the method for metallizing a plastic surface may be used for manufacturing plastic article, such as a shell of an electrical device, for example, a mobile phone, a laptop computer, a shell of an refrigerator, a lamp stand, a plastic container etc., where selective surface metallizing may be desired. And in the following, a method for preparing a plastic article will be described in detail.

The method for preparing a plastic article comprises the steps of: 1) forming at least a part of the plastic article with a support comprising a supporting material and an electroless plating promoter; 2) gasifying a surface of the support by laser to expose the electroless plating promoter; and 3) electroless plating a layer of copper or nickel on the surface followed by electroplating or electroless plating at least one time, to form a metallized layer on the surface.

The electroless plating promoter includes one or more members selected from a group consisting ofcomposite oxide having a delafossite structure of ABO₂.

The composite oxide ABO₂ may include MNiO₂, MMnO₂, MCrO₂, MAlO₂ or MFeO₂, where M may be selected from Cu, Ni or Co.

Research shows that, in addition to pure Cu and Pd as nucleus or grain for electroless plating, nano-CuO can promote the speed of chemical deposition of electroless plating on plastic surface. However, nano-CuO may also cause the degradation of the plastic.

The electroless plating promoter in step 1) may include one or more members selected from a group consisting of MNiO₂, MMnO₂, MCrO₂, MAlO₂, and MFeO₂" M may be selected from Cu, Ni or Co. Such electroless plating promoters can promote the chemical deposition of electroless plating on their surface without causing the degradation of the plastic while remained in the support for a long time.

According to the method for preparing a plastic article of the present invention, a support may be firstly provided, comprising a supporting material and an electroless plating promoter. The electroless plating promoter may be evenly distributed in the supporting material.

The average particle diameter of the electroless plating promoter may be not greater than 100 micrometers. In other embodiments, the average particle diameter of the electroless plating promoter may range from about 20 nanometers to about 10 micrometers. Most of the electroless plating promoters can be commercially obtained. And the composite oxide ABO₂ and co-fired oxides may be prepared by following steps: providing corresponding oxides as mentioned above; After ball milling and mixing, sintering a mixture thereof in a vacuum furnace under a temperature ranging from about 700 to 1500 °C; and ball-milling the mixture to the desired particles.

The supporting material may be thermoplastic or thermosetting resin. The thermoplastic may include one or more members selected from a group consisting of polyolefin, polycarbonate (PC), polyester, polyamide, polyaromatic ether, polyester-imide, polycarbonate/acrylonitrile-butadiene-styrene composite (PC/ABS), polyphenylene oxide (PPO), polyphenylene sulfide (PPS), polyimide (Pl), polysulfone (PSU), poly (ether ether ketone) (PEEK), polybenzimidazole (PBI) and liquid crystalline polymer (LCP); wherein the polyolefin may be polystyrene (PS), polypropylene (PP), polymethyl methacrylate(PMMA) or acrylonitrile-butadiene-styrene (ABS); the polyester may be polycyclohexylene dimethylene terephthalate (PCT), poly(diallyl isophthalate) (PDAIP), poly(diallyl terephthalate) (PDAP), polybutylene naphthalate (PBN), Poly(ethylene terephthalate) (PET), or polybutylene terephthalate (PBT); the polyamide may be polyhexamethylene adipamide (PA-66), Nylon 69 (PA-69), Nylon 64 (PA-64), Nylon 612 (PA-612), polyhexamephylene sebacamide (PA-610), Nylon 1010 (PA-1010), Nylon 11 (PA-11), Nylon 12 (PA-12), Nylon 8 (PA-8), Nylon 9 (PA-9), polycaprolactam (PA-6), poly(p-phenytene terephthalamide) (PPTA), poly-meta-xylylene adipamide (MXD6), polyhexamethylene terephthalamide (PA6T), and Nylon 9T (PA9T); the thermosetting resin may include one or more members selected from a group consisting of phenolic resin, urea-formaldehyde resin, melamine-formaldehyde resin, epoxy resin, alkyd resin and polyurethane.

The support may be formed by any method known in the art:
Firstly, the supporting material and the electroless plating promoter may be mixed by, for example, internal mixer, single screw extruder, twin screw extruder, or mixer; and then the mixture may be processed by injection molding, blow molding, pressing or hot-pressing to form a support with a desired shape.

The amount of electroless plating promoter may be ranged from about 1 % to about 40 % of the support by weight. In other embodiments, the amount of electroless plating promoter may be ranged from about 2 % to about 30 % of the support by weight.

The support may further comprise at least one member selected from antioxidant, light stabilizer, lubricant and inorganic filler. The antioxidant, light stabilizer, lubricant and inorganic filler may be bought in market, and may be mixed with the supporting material and the electroless plating promoter to form the support.

The antioxidant may be about 0.01 % to about 2 % of the support by weight; the light stabilizer may be about 0.01 % to about 2 % of the support by weight; the lubricant may be about 0.01 % to about 2 % of the support by weight; and the inorganic filler may be about 1 % to about 70 % of the support by weight.

The antioxidant may enhance the oxidation resistance of the support and the light stabilizer may enhance the light stability of the support.

The lubricant may enhance fluidity of the plastic so that the plastic support may be evenly mixed. It may include one or more members selected from a group consisting of methylpolysiloxane, ethylene/vinyl acetate wax (EVA wax), polyethylene wax and stearate.

The inorganic filler may be talcum powder, calcium carbonate, glass fiber, calcium silicate fiber, tin oxide or carbon black. The glass fiber may increase the etched depth of the support while gasifying by laser which is favorable for the adhesion of the Cu during electroless plating of Cu. And the tin oxide or carbon black may enhance the energy efficiency of the laser. In some instance, the inorganic filler may further be glass bead, calcium sulfate, barium sulfate, titanium dioxide, pearl powder, wollastonite, diatomite, kaolin, coal powder, argil, mica, oil shale ash, aluminum silicate, alumina, carbon fiber, silicon dioxide or zinc oxide. The inorganic filler may preferably that not containing Cr, which is amicable to environment and human body.

The electroless plating promoter may be evenly distributed in the supporting material, the adhesive force between the electroless plating promoter and the supporting material is very high so that the following electroless plating may be achieved on the surface of the electroless plating promoter directly. As a result, the adhesive force between the formed coating and the support is increased tremendously.

The laser-gasifying may be achieved on the surface of the plastic article where the part is made of plastic to expose the electroless plating promoter. The desired pattern may be formed on the surface of the support by the method of the present invention. The laser equipment may be infrared laser, CO₂ laser marking system for example, the conditions of laser-gasifying may include that the wavelength of the laser may be about 157nm to about 10.6µm, scanning speed may be from about 500 to about 8000 mm/s, scanning step size may be about 3 to about 9 µm, scan time delay may be about 30 to 100 µs, laser power may be about 3 to 4 W, the frequency may be from about 30 to 40 KHz, and the filled distance may be about 10 to 50 µm. The energy demand of the present disclosure may be low, it just need to gasify the surface of the support to expose the electroless plating promoter, without reducing the support to the metal core.

The thickness of the support may be greater than about 500 µm, and the etched depth of the support may be about 1 to about 20 µm, the electroless plating promoter may be exposed to form a microscopic and coarse surface on which the followed electroless plating may be performed.

The gasifying of plastic support may cause plastic smoke, which may drop down and cover the exposed electroless plating promoter. A ventilating unit may be used during laser-gasifying for exhausting the smoke. Additionally, the support may be performed with ultrasonic cleaning after laser-gasifying.

Electroless plating a copper or nickel layer may be performed on the exposed electroless plating promoter, and then electroplating or electroless plating again to form a metallized layer area on the support. The electroless plating method may be those normally practiced in the art. For example, the support may be immersed into an electroless plating bath.

After contacting with the chemical-copper solution or chemical-nickel solution in the electroless plating bath, the exposed electroless plating promoter may promote the Cu ion and Ni ion to undertake reduction to form pure Cu or Ni particles which envelop the surface of the electroless plating promoter so that a compact or dense first plating layer may be formed on the laser-gasified area.

To increase the surface decoration, applicability and corrosion resistance, one or more plating layers may be formed on the first plating layer to obtain the final metallizating layer.

In one embodiment, the first plating layer may be nickel layer, a second electroless plating may be performed on the nickel layer to form a second copper layer, and then a third electroless plating may be performed on the second layer to form a third nickel layer, as the result, the metallized layer may be Ni-Cu-Ni from inside the plastic article to outside thereof. In another embodiment, an Au layer may be strike plated on the Ni-Cu-Ni layer to obtain a metallized layer of Ni-Cu-Ni-Au.

In another embodiment, the first plating layer may be copper layer, a second electroplating may be performed on the copper layer to form a second nickel layer, as the result, the metallized layer may be Cu-Ni from inside the plastic article to outside thereof. In yet another embodiment, an Au layer may be strike plated on the Cu-Ni layer to obtain a metallized layer of Cu-Ni-Au.

In the Ni-Cu-Ni, Ni-Cu-Ni-Au, Cu-Ni or Cu-Ni-Au layers, the thickness of the Ni layer may be about 0.1 to about 10 µm; the thickness of the Cu layer may be about 0.1 to about 100 µm; and the thickness of the Au layer may be about 0.01 to about 10 µm.

The electroless plating solution and the electroplating solution may be that known in the art or may be commercially obtained. The electroless plating copper solution having a pH value of about from 12 to 13 may comprise a copper salt and a reducing agent which may reduce the copper salt to copper metal, the reducing agent may be one or more selected from glyoxylic acid, hydrazine and sodium hypophosphite. In one instance, the electroless plating copper solution having a pH value of about 12.5 to 13 may be proposed as follows: CuSO₄•5H₂O of about 0.12 mol/L, Na₂EDTA·2H₂O of about 0.14 mol/L, potassium ferrocyanide of about 10 mg/L, 2, 2'-bipyridine of about 10 mg/L, HCOCOOH of about 0.10 mol/L, NaOH and H₂SO₄. The electroless plating nickel solution having a pH value of about 5.2 may be proposed as follows: nickel sulfate of about 23 g/l, sodium hypophosphite of about 18 g/l, lactic acid of about 20 g/l, malic acid of about 15 g/l adjusted by NaOH under a temperature of 85-90°C.

The electroless plating copper time may be about 10 to 240 minutes, the electroless plating nickel time may be about 8 to 15 minutes.

There is substantially no electroless plating promoter or electroless plating deposit on the surface of the support where no electroless plating promoter is existed. Thus, the electroplating speed is very low with weak adhesive force. Even there is little chemical deposition, it may be erased easily. Thus, direct selective surface metallizing may be achieved easily according to the present invention.

Further, the present invention discloses a plastic article as manufactured by the method as mentioned above. The plastic article may comprise a support and a metallized layer area on a surface of the support. The metallized layer may be Ni-Cu-Ni, Ni-Cu-Ni-Au, Cu-Ni or Cu-Ni-Au from the inner portion of the plastic article to the outer portion thereof.

The following provides additional details on some embodiments of the present disclosure.

### Embodiment 1 not falling under the present invention

Step (1) CuC₂O₄·2H₂O is dehydrated with crystal water under vacuum, and then the CuC₂O₄ is ball milled so that D50 is not greater than 1µm, and dried; PP resin, CuC₂O₄, talcum powder, and antioxidant 1010 are mixed with a mass ratio of 100: 15: 10: 0.2 by a mixer, and then the mixture is operated by a single screw extruder to form a pipe article.
Step (2) An outer surface of the pipe article is irradiated by an infrared laser (DPF-M12); the conditions thereof include the following: the wavelength of the laser is about 1064 nm, the scanning speed is about 1000 mm/s, the scanning step size is about 9 µm, the scan time delay is about 30 µs, the laser power is about 3 W, the frequency is about 40 KHz, and the filled distance is about 50 µm. And then the pipe article is ultrasonically cleaned.
Step (3) The pipe article is placed in an electroless plating copper solution for 3 hours to form a copper layer of about 10 µm, and then placed in an electroless plating nickel solution for 10 minutes to form a nickel layer with a thickness of about 3 µm. The electroless plating copper solution having a pH value of about 12.5 to 13 is proposed as follows: CuSO₄•5H₂O of about 0.12 mol/L, Na₂EDTA·2H₂O of about 0.14 mol/L, potassium ferrocyanide of about 10 mg/L, 2, 2'-bipyridine of about 10 mg/L, HCOCOOH of about 0.10 mol/L, NaOH and H₂SO₄. The electroless plating nickel solution having a pH value of about 5.2 is proposed as follows: nickel sulfate of about 23 g/l, sodium hypophosphite of about 18 g/l, lactic acid of about 20 g/l, malic acid of about 15 g/l adjusted by NaOH and H₂SO₄.

Thus, a pipe article is manufactured by the above steps.

### Embodiment 2 not falling under the present invention

The embodiment 2 is substantially similar in all respects to that of Embodiment 1, excepting that:
Step (1) CuSiO₃ is ball milled so that D50 is not greater than 2 µm; PC resin, CuSiO₃,
antioxidant 168, and EVA wax are mixed by a mass ratio of 100: 20: 0.2: 0.1, and then the mixture is performed with injection molding to form a shell of an electric device.
Step (2) A circuit pattern is printed on the surface of the shell by the infrared laser (DPF-M12); and then the shell is ultrasonically cleaned.
Step (3) The shell is placed in an electroless plating nickel solution for 10 minutes to form a nickel layer of about 3 µm, then placed in an electroless plating copper solution for 3 hours to form a copper layer of about 11 µm and lastly, the shell is placed in an electroless plating nickel solution for 10 minutes to form a nickel layer of about 3 µm.

Thus, a plastic shell of an electric device is formed by above steps.

### Embodiment 3 not falling under the present invention

The embodiment 2 is substantially similar in all respect to that of Embodiment 2 with the exception that:
Step (1) Co₂O₃ is ball milled so that D50 is not greater than 5 µm; PBT resin, Co₂O₃, glass fiber, and light stabilizer 944 are mixed by a mass ratio of 100: 15: 35: 0.2 with a twin screw extruder, and then the mixture is performed with injection molding to form a shell of auto connecter.
Step (3) The shell is placed in an electroless plating nickel solution for 10 minutes to form a nickel layer of about 3 µm, then placed in an electroless plating copper solution for 2 hours to form a copper layer of about 6 µm, then placed in an electroless plating nickel solution for 10 minutes to form a nickel layer of about 3 µm, and lastly, the shell is formed with a Au layer of about 0.03 µm by strike plating.

Thus, the shell of an auto connecter is formed by the above steps.

### Embodiment 4 not falling under the present invention

The embodiment 4 is substantially similar in all respects to that of Embodiment 2 with the exception that:
Step (1) Ni₂O₃ is ball milled so that D50 is not greater than 10 µm; PC resin, Ni₂O₃, antioxidant 1076, and polyethylene wax are mixed by a mass ratio of 100: 10: 0.2: 0.1; and then the mixture is performed with a blow molding to form a shell of an electric device for an auto.
Step (3) The shell is placed in an electroless plating nickel solution for 10 minutes to form a nickel layer of about 3 µm, then placed in an electroless plating copper solution for 2 hours to form a copper layer of about 6 µm, and lastly, the shell is placed in an electroless plating nickel solution for 12 minutes to form a nickel layer of about 4 µm. Thus, the shell of an electric device for an auto is formed by the above steps.

Embodiment 5 not falling under the present invention
Step (1) 54.1 g of CuO (0.68mol), 27.13 g of Fe₂O₃ (0.17mol) and 26.87 g of Mn₂O₃ (0.17mol) are mixed and stirred in a vacuum furnace under a temperature of about 1000 °C for 2 hours; and then the mixture is ball milled to an average particle diameter of about 0.8 µm, and then the mixture is analyzed as CuFe_{0.5}Mn_{0.5}O_{2.5} by XPS.
Step (2) PPO resin, CuFe_{0.5}Mn_{0.5}O_{2.5}, calcium silicate fiber, and antioxidant 1076 are mixed by a mass ratio of 100: 10: 0.2: 0.1, and then the mixture is performed with injection molding to form a connector shell of a solar panel.
Step (3) A circuit pattern is printed on the surface of the shell by an infrared laser (DPF-M12); and then the shell is ultrasonically cleaned.
Step (4) The shell is placed in an electroless plating nickel solution for 8 minutes to form a nickel layer of about 2 µm, then placed in an electroless plating copper solution for 4 hours to form a copper layer of about 15 µm, and lastly placed in an electroless plating nickel solution for 10 minutes to form a nickel layer of about 3 µm.

Thus, the connector shell of the solar panel is formed by the above steps.

### Embodiment 6 not falling under the present invention

The Embodiment 6 is substantially similar in all respects to those of Embodiment 5 with the exception that:
Step (1) 54.1 g of CuO (0.68mol), 27.13 g of Fe₂O₃ (0.17mol) and 17.33 g of Al₂O₃ (0.17mol) are mixed and stirred in a vacuum furnace under a temperature of about 1000 °C for 2 hours; and then the mixture is ball milled to an average particle diameter of about 0.5 µm, and then the mixture is analyzed as CuFe_{0.5}Al_{0.5}O_{2.5} by XPS.
Step (2) PA6T resin, CuFe_{0.5}Al_{0.5}O_{2.5}, antioxidant 1076, and polyethylene wax are mixed by a mass ratio of 100: 10: 0.2: 0.1, and then the mixture is performed with injection molding to form a connector shell of an electric device for an auto.
Step (4) The shell is placed in an electroless plating nickel solution for 8 minutes to form a nickel layer of about 2 µm, then placed in an electroless plating copper solution for 4 hours to form a copper layer of about 15 µm, and placed in an electroless plating nickel solution for 10 minutes to form a nickel layer of about 3 µm, and lastly, the shell is formed with a Au layer of about 0.03 µm by strike plating.

Thus, the shell of the electric device for an auto is produced by the above steps.

### Embodiment 7 not falling under the present invention

The Embodiment 7 is substantially similar in all respects to those of Embodiment 5 with the exception that:
Step (1) 54.1 g of CuO (0.68mol), 13.56 g of Fe₂O₃ (0.085mol), 8.67 g of Al₂O₃ (0.085mol) and 26.87g of Mn₂O₃ (0.17mol) are mixed and stirred in a vacuum furnace under a temperature of about 1000 °C for 2 hours; and then the mixture is ball milled to an average particle diameter of about 1.0 µm, and then the mixture is analyzed as CuFe_{0.25}Al_{0.25}Mn_{0.5}O₂ by XPS.
Step (2) PPS resin, CuFe_{0.25}Al_{0.5}Mn_{0.5}O_{2.5}, antioxidant 1076, and polyethylene wax are mixed with a mass ratio of 100: 10: 0.2: 0.1, and then the mixture is performed injection molding to form a shell of an electric connector.
Step (4) The shell is placed in an electroless plating copper solution for 3 hours to form a copper layer of about 12 µm, and then placed in an electroless plating nickel solution for 10 minutes to form a nickel layer of about 3 µm.

Thus, the shell of the electric connector is formed by the above steps.

### Embodiment 8 not falling under the present invention

Step (1): Ni₂O₃ with an average particle diameter 50 nm of 100 g and talcum powder of 10 g are added into polycarbonate of 1000 g; The mixture is mixed with high speed and transferred into an extruder to form particles, then the mixture is performed with injection molding to form a plastic sample with a thickness of 2 mm;
Step (2): A surface of the plastic sample is irradiated by laser with substantially the same steps as those in step (2) of Embodiment 1;
Step (3): The treated plastic sample is immersed in the electroless plating copper solution as adopted in step (3) of Embodiment 1 for electroless copper plating with a measured copper plating speed of 4 µm/h.

### Embodiment 9 not falling under the present invention

The steps in Embodiment 9 are the same as those in Embodiment 8 for preparing the plastic article as defined in the present invention, with the exceptions that:
Step (1): Co₂O₃ with an average particle diameter 100 nm of 100 g and glass fiber of 30 g are added into PC of 5000 g; the mixture is rotated and mixed with high speed, and then the mixture is transferred into an extruder to form particles; And the particles are performed with injection molding to form a plastic sample with a thickness of 2 mm;
Step (2): the laser has the following parameters: wavelength 300nm; scanning speed 5000mm/s; scanning step 3 µm, time delay 60 µs; frequency 40 kHz; power 3 W; and a filling distance 30 µm;
Step (3): The treated plastic sample is immersed in the electroless plating copper solution as adopted in step (3) of Embodiment 1 for electroless copper plating with a measured copper plating speed of 2 µm/h.

### Embodiment 10 not falling under the present invention

The steps in Embodiment 10 are the same as those in Embodiment 8 for preparing the plastic article as defined in the present invention, with the exceptions that:
Step (1): CuSiO₃ with an average particle diameter 500 nm of 100 g and kaolin of 70 g are added into PET of 10000 g; the mixture is rotated and mixed with high speed, and then the mixture is transferred into an extruder to form particles; and the particles are performed with injection molding to form a plastic sample with a thickness of 2 mm;
Step (2): the laser has the following parameters: wavelength 10600 nm; scanning speed 8000 mm/s; scanning step 6 µm; time delay 100 µs; frequency 30 kHz; power 4 W; and a filling distance 40µm;
Step (3): The treated plastic sample is immersed in the electroless plating copper solution as adopted in step (3) of Embodiment 1 for electroless copper plating with a measured copper plating speed of 5 µm/h.

### Embodiments 11-26 (Embodiments 11 - 22 not falling under the present invention)

The embodiments 11-26 use the same surface metallizing processes as those in Embodiment 8 with the difference lie in that the components in Table 1 are adopted for the electroless plating promoter with the measured copper plating speed of the embodiments 11-26 being shown in Table 1.

The hydrogenation catalysts in embodiments 20-22 are prepared by the methods disclosed in Acta Physico-Chimica Sinica, 2004, 20(5): 524-528 and Angew. Chem. Int. Ed. 2003, 42, 3815-3817.

For example, the Cn-Zn hydrogenation catalyst may be prepared as follows: a mixed nitrate solution of Cu and Zn is prepared with a Cu : Zn mole ratio of 8:1 so that the total concentration of metal ions in the mixed solution is 0.5 mol/L. With Na₂CO₃ of a concentration of 0.5 mol/L as precipitant and under a temperature of 85°C with rapid stirring, the Na₂CO₃ solution and the Na₂CO₃ solution are added into a reactor to obtain a solution with a pH of 6.8-7.0. At the end of the reaction, the solution has a pH value of 7.0. The solution is aged for 1 hour under this temperature. After cooling, the solution is filtered and cleaned with deionized water, and dried under a temperature of 110°C. After that, it is baked under a temperature of 350°C for 4 hours, thus obtaining the desired Cu-Zn hydrogenation catalyst. Based on the oxides, the Cu-Zn hydrogenation catalyst is detected to have a Cu: Zn mass ratio of 8.1 : 1.

### Reference 1

Reference 1 uses the same method as used in Embodiment 8 for selective plastic surface metallization. The difference therebetween lies in that the electroless plating promoter in step (1) uses the components as shown in Table 1 with the measured copper plating speed also indicated in Table 1.

**Table 1**

| | Type of electroless plating promoter | Example | Electroless copper plating speed (µm/h) |
|---|---|---|---|
| Embodiment 8 | Oxides of the metal elements selected from the ninth, tenth, eleventh columns of the Periodic Table of Elements except Cu | Ni₂O₃ | 4 |
| Embodiment 9 | | Co₂O₃ | 2 |
| Embodiment 10 | Silicate of metal elements selected from the ninth, tenth, eleventh columns of the Periodic Table of Elements | CuSiO₃ | 5 |
| Embodiment 11 | | NiSiO₃ | 3 |
| Embodiment 12 | | CoSiO₃ | 2 |
| Embodiment 13 | Borate of metal elements selected from the ninth, tenth, eleventh columns of the Periodic Table of Elements | CuB₂O₄ | 5 |
| Embodiment 14 | | Cu₃B₂O₆ | 9 |
| Embodiment 15 | | Ni₃B₂O₆ | 6 |
| Embodiment 16 | | CoB₂O₄ | 4 |
| Embodiment 17 | Oxalate of metal elements selected from the ninth, tenth, eleventh columns of the Periodic Table of Elements | CuC₂O₄ | 5 |
| Embodiment 18 | | NiC₂O₄ | 4 |
| Embodiment 19 | | CoC₂O₄ | 3 |
| Embodiment 20 | Hydrogenation catalyst having one or more elements selected from the ninth, tenth, eleventh columns of the Periodic Table of Elements | Cu-Zn | 8 |
| Embodiment 21 | | Cu-Zn-Ni | 6 |
| Embodiment 22 | | Cu-Zn-Co | 7 |
| Embodiment 23 | ABO₂ type composite oxides having a delafossite structure (A is one of metal elements selected from ninth, tenth, eleventh columns of the Periodic Table of Elements, B is an element selected from a group consisting of Ni, Mn, Cr, Al and Fe and A, B are different from each other) | CuNiO₂ | 5 |
| Embodiment 24 | | CuMnO₂ | 4 |
| Embodiment 25 | | CuFeO₂ | 3 |
| Embodiment 26 | | CoAlO₂ | 2 |
| Reference 1 | - | ZnO | 0.05 |

From Embodiment 8 and Reference 1, it can seen that the electroless copper plating speed is only 0.05 µm/h for the existing catalyst ZnO whereas the electroless copper plating speed may reach up to 4 µm/h for Ni₂O₃ as the catalyst under the same conditions.

### Embodiments 27-45 (Embodiments 27 - 41 not falling under the present invention)

Embodiments 27-45 adopt the same processes used in Embodiments 8-26 for performing selective metallizing on plastic surface. The differences therebetween lie in that it is performed with electroless nickel plating in an electroless nickel plating solution before electroless copper plating in step (3), the plating solution has a temperature of 90 °C, and the measured nickel plating speed is also shown in Table 2.

The electroless nickel plating solution having a pH value of 5.2: nickel sulfate of about 23 g/l, sodium hypophosphite of about 18 g/l, lactic acid of about 20 g/l, malic acid of about 15 g/l adjusted by NaOH.

### Reference 2

Reference 2 uses the same method as used in Embodiment 27 for selective plastic surface metallization. The difference therebetween lies in that the electroless plating promoter in step (1) uses the components as shown in Table 2 with the measured nickel plating speed also indicated in Table 2.

**Table 2**

| | Type of electroless plating promoter | Example | Electroless nickel plating speed (µm/h) |
|---|---|---|---|
| Embodiment 27 | Oxides of the metal elements selected from the ninth, tenth, eleventh columns of the Periodic Table of Elements except Cu | Ni₂O₃ | 3 |
| Embodiment 28 | | Co₂O₃ | 1 |
| Embodiment 29 | Silicate of metal elements selected from the ninth, tenth, eleventh columns of the Periodic Table of Elements | CuSiO₃ | 5 |
| Embodiment 30 | | NiSiO₃ | 3 |
| Embodiment 31 | | CoSiO₃ | 2 |
| Embodiment 32 | Borate of metal elements selected from the ninth, tenth, eleventh columns of the Periodic Table of Elements | CuB₂O₄ | 5 |
| Embodiment 33 | | Cu₃B₂O₆ | 6 |
| Embodiment 34 | | Ni₃B₂O₆ | 5 |
| Embodiment 35 | | CoB₂O₄ | 4 |
| Embodiment 36 | Oxalate of metal elements selected from the ninth, tenth, eleventh columns of the Periodic Table of Elements | CuC₂O₄ | 5 |
| Embodiment 37 | | NiC₂O₄ | 4 |
| Embodiment 38 | | CoC₂O₄ | 3 |
| Embodiment 39 | Hydrogenation catalyst having one or more elements selected from the ninth, tenth, eleventh columns of the Periodic Table of Elements | Cu-Zn | 6 |
| Embodiment 40 | | Cu-Zn-Ni | 8 |
| Embodiment 41 | | Cu-Zn-Co | 7 |
| Embodiment 42 | ABO₂ type composite oxides having a delafossite structure (A is one of metal elements selected from ninth, tenth, eleventh columns of the Periodic Table of Elements, B is an element selected from a group consisting of Ni, Mn, Cr, Al and Fe and A, B are different from each other) | CuNiO₂ | 5 |
| Embodiment 43 | | CuMnO₂ | 4 |
| Embodiment 44 | | CuFeO₂ | 3 |
| Embodiment 45 | | CoAlO₂ | 2 |
| Reference 2 | - | ZnO | 0.05 |

From Embodiment 27 and Reference 2, it can seen that the electroless nickel plating speed is only 0.05 µm/h for the existing catalyst ZnO whereas the electroless nickel plating speed may reach up to 3 µm/h for Ni₂O₃ as the catalyst under the same conditions.

## Claims

1. A method for metallizing a plastic surface of a plastic article, the plastic article having at least a part thereof made from a support comprising a supporting material and an electroless plating promoter including one or more members selected from a group consisting of ABO₂ type composite oxides having a delafossite structure, in which A is one of metal elements selected from Co, Ni, Cu, B is an element selected from a group consisting of Ni, Mn, Cr, Al and Fe where A, B are different, the method comprising the steps of:
1) gasifying the plastic surface by laser to expose the electroless plating promoter; and
2) electroless plating a layer of copper or nickel on the plastic surface, followed by electroplating or a second electroless plating to form a metallized layer on the plastic surface.

2. The method according to claim 1, wherein the laser has a wavelength ranging from 157 nm to 10.6 µm with a scanning speed from 500 to 8000 mm/s, a scanning step size from 3 to 9 µm, a scan time delay from 30 to 100 µs, a laser power from 3 to 4 W, a frequency from 30 to 40 KHz and a filled distance from 10 to 50 µm.

3. The method according to claim 1, wherein the electroless plating promoter is a particle with an average diameter of not greater than 100 micrometers.

4. The method according to claim 1, wherein the electroless plating promoter includes one or more members selected from a group consisting of MNiO₂, MMnO₂, MCrO₂, MAlO₂, MFeO₂ where M is Cu, Ni or Co.

5. The method according to claim 1, wherein the supporting material is a thermoplastic material or thermosetting resin material.

6. The method according to claim 1, wherein the electroless plating promoter amounts to 1 % to 40% of the supporting material by weight.

7. The method according to claim 5, wherein the support material further comprises at least one member selected from inorganic filler, antioxidant, light stabilizer and lubricant.

8. The method according to claim 1, comprising the steps of:
forming at least a part of the plastic article with a support comprising a supporting material and an electroless plating promoter.

9. The method according to claim 8, wherein the plastic article is formed by injection molding, blow molding, extruding or hot pressing.

10. The method according to claim 8, wherein the electroless plating promoter is a particle with an average diameter of not greater than 100 micrometers.

11. The method according to claim 8, wherein the electroless plating promoter is evenly distributed in the supporting material.

12. A plastic article with a metallized plastic surface, the plastic article having at least a part thereof made from a support comprising a supporting material and an electroless plating promoter including one or more members selected from a group consisting of ABO₂ type composite oxides having a delafossite structure, in which A is one of metal elements selected from Co, Ni, Cu, B is an element selected from a group consisting of Ni, Mn, Cr, Al and Fe where A, B are different, the metallized plastic article being manufactured by the method according to any one of the preceding claims.

## Patentansprüche

1. Verfahren zur Metallisierung einer Kunststoffoberfläche eines Kunststoffartikels, wobei der Kunststoffartikel zumindest einen Teil davon aufweist, der aus einem Träger besteht, der ein Trägermaterial und einen Beschleuniger einer stromlosen Abscheidung aufweist, der ein oder mehrere Mitglieder aufweist, die ausgewählt sind aus einer Gruppe bestehend aus Mischoxiden vom ABO₂-Typ, die eine Delafossit-Struktur aufweisen, wobei A eines von Metallelementen ist, die aus Co, Ni, Cu ausgewählt sind, B ein Element ist, das aus einer Gruppe bestehend aus Ni, Mn, Cr, Al und Fe ausgewählt ist, wobei A, B verschieden sind, wobei das Verfahren die folgenden Schritte aufweist:
1) Vergasen der Kunststoffoberfläche mit einem Laser zum Freilegen des Beschleunigers der stromlosen Abscheidung; und
2) stromloses Abscheiden einer Schicht aus Kupfer oder Nickel auf der Kunststoffoberfläche, gefolgt von einer Elektroplattierung oder einer zweiten stromlosen Abscheidung zur Ausbildung einer metallisierten Schicht auf der Kunststoffoberfläche.

2. Verfahren nach Anspruch 1, wobei der Laser eine Wellenlänge im Bereich von 157 nm bis 10,6 µm mit einer Abtastgeschwindigkeit von 500 bis 8000 mm/s, einer Abtastschrittweite von 3 bis 9 µm, einer Abtastzeitverzögerung von 30 bis 100 µs, einer Laserleistung von 3 bis 4 W, einer Frequenz von 30 bis 40 KHz und einem Füllabstand von 10 bis 50 µm aufweist.

3. Verfahren nach Anspruch 1, wobei der Beschleuniger der stromlosen Abscheidung ein Partikel mit einem durchschnittlichen Durchmesser von nicht mehr als 100 Mikrometern ist.

4. Verfahren nach Anspruch 1, wobei der Beschleuniger der stromlosen Abscheidung ein oder mehrere Mitglieder aufweist, die aus einer Gruppe bestehend aus MNiO₂, MMnO₂, MCrO₂, MAlO₂, MFeO₂, ausgewählt sind, wobei M Cu, Ni oder Co ist.

5. Verfahren nach Anspruch 1, wobei das Trägermaterial ein thermoplastisches Material oder ein wärmehärtbares Harzmaterial ist.

6. Verfahren nach Anspruch 1, wobei der Beschleuniger der stromlosen Abscheidung 1 Gewichts-% bis 40 Gewichts-% des Trägermaterials beträgt.

7. Verfahren nach Anspruch 5, wobei das Trägermaterial weiterhin zumindest ein Mitglied aufweist, das aus einem anorganischen Füllstoff, einem Antioxidans, einem Lichtstabilisator und einem Schmiermittel ausgewählt ist.

8. Verfahren nach Anspruch 1, aufweisend die folgenden Schritte:
Ausbildung zumindest eines Teils des Kunststoffartikels mit einem Träger, der ein Trägermaterial und einen Beschleuniger der stromlosen Abscheidung aufweist.

9. Verfahren nach Anspruch 8, wobei der Kunststoffartikel durch Spritzgießen, Blasformen, Extrudieren oder Heißpressen ausgebildet wird.

10. Verfahren nach Anspruch 8, wobei der Beschleuniger der stromlosen Abscheidung ein Partikel mit einem durchschnittlichen Durchmesser von nicht mehr als 100 Mikrometern ist.

11. Verfahren nach Anspruch 8, wobei der Beschleuniger der stromlosen Abscheidung gleichmäßig im Trägermaterial verteilt ist.

12. Kunststoffartikel mit einer metallisierten Kunststoffoberfläche, wobei der Kunststoffartikel zumindest einen Teil davon aufweist, der aus einem Träger besteht, der ein Trägermaterial und einen Beschleuniger einer stromlosen Abscheidung aufweist, der ein oder mehrere Mitglieder aufweist, die ausgewählt sind aus einer Gruppe bestehend aus Mischoxiden vom ABO₂-Typ, die eine Delafossit-Struktur aufweisen, wobei A eines von Metallelementen ist, die aus Co, Ni, Cu ausgewählt sind, B ein Element ist, das aus einer Gruppe bestehend aus Ni, Mn, Cr, Al und Fe ausgewählt ist, wobei A, B verschieden sind, wobei der metallisierte Kunststoffartikel durch das Verfahren nach einem der vorhergehenden Ansprüche hergestellt wird.

## Revendications

1. Procédé de métallisation d'une surface en plastique d'un article en plastique, l'article en plastique ayant au moins une partie de celui-ci réalisée à partir d'un support comprenant un matériau de support et un promoteur de dépôt autocatalytique comprenant un ou plusieurs membres sélectionnés dans un groupe constitué d'oxydes mixtes de type ABO₂ présentant une structure délafossite, A étant un élément d'éléments métalliques sélectionnés parmi Co, Ni, Cu, B étant un élément sélectionné dans un groupe constitué de Ni, Mn, Cr, Al, et Fe, A, B étant différents, le procédé comprenant les étapes suivantes :
1) gazéification de la surface en plastique par laser pour exposer le promoteur de dépôt autocatalytique, et
2) dépôt autocatalytique d'une couche de cuivre ou de nickel sur la surface en plastique, suivi par l'électrodéposition ou un second dépôt autocatalytique pour former une couche métallisée sur la surface en plastique.

2. Procédé selon la revendication 1, dans lequel le laser a une longueur d'onde dans la plage de 157 nm à 10,6 µm à une vitesse de balayage de 500 à 8000 mm/s, une taille du pas de balayage de 3 à 9 µm, une temporisation de balayage de 30 à 100 µs, une puissance laser de 3 à 4 W, une fréquence de 30 à 40 KHz et une distance remplie de 10 à 50 µm.

3. Procédé selon la revendication 1, dans lequel le promoteur de dépôt autocatalytique est une particule ayant un diamètre moyen non supérieur à 100 micromètres.

4. Procédé selon la revendication 1, dans lequel le promoteur de dépôt autocatalytique comprend un ou plusieurs membres sélectionnés dans un groupe constitué de MNiO₂, MMnO₂, MCrO₂, MAlO₂, MFeO₂, M étant Cu, Ni ou Co.

5. Procédé selon la revendication 1, dans lequel le matériau de support est un matériau thermoplastique ou un matériau de résine thermodurcissable.

6. Procédé selon la revendication 1, dans lequel le promoteur de dépôt autocatalytique est de 1 % à 40% en poids du matériau de support.

7. Procédé selon la revendication 5, dans lequel le matériau de support comprend en outre au moins un membre sélectionné parmi une charge inorganique, un antioxydant, un stabilisant lumière et un lubrifiant.

8. Procédé selon la revendication 1, comprenant les étapes suivantes :
former au moins une partie de l'article en plastique avec un support comprenant un matériau de support et un promoteur de dépôt autocatalytique.

9. Procédé selon la revendication 8, dans lequel l'article en plastique est formé par moulage par injection, par moulage par soufflage, par extrusion ou par pressage à chaud.

10. Procédé selon la revendication 8, dans lequel le promoteur de dépôt autocatalytique est une particule ayant un diamètre moyen non supérieur à 100 micromètres.

11. Procédé selon la revendication 8, dans lequel le promoteur de dépôt autocatalytique est réparti régulièrement dans le matériau de support.

12. Article en plastique ayant une surface en plastique métallisée, l'article en plastique ayant au moins une partie de celui-ci réalisée à partir d'un support comprenant un matériau de support et un promoteur de dépôt autocatalytique comprenant un ou plusieurs membres sélectionnés dans un groupe constitué d'oxydes mixtes de type ABO₂ présentant une structure délafossite, A étant un élément d'éléments métalliques sélectionnés parmi Co, Ni, Cu, B étant un élément sélectionné dans un groupe constitué de Ni, Mn, Cr, Al et Fe, A, B étant différents, l'article en plastique métallisé étant fabriqué par le procédé selon l'une des revendications précédentes.
